# EUROPEAN PATENT APPLICATION

(11) **EP 4 803 380 A1**
(43) Date of publication of application: **09.09.2026**
(21) Application number: 24883826.0
(22) Date of filing: 30.04.2024
(51) Int. Cl.: B60R 16/023, B60R 16/03

(54) **POWER DISTRIBUTION APPARATUS AND VEHICLE**

(30) Priority: 30.10.2023 CN 202311423773; 30.10.2023 CN 202322923038 U
(71) Applicant: Guangzhou Automobile Group Co., Ltd., Guangzhou, Guangdong 511434 (CN)
(72) Inventor: CHEN, Chao, Guangzhou, Guangdong 511434 (CN); LIN, Jihan, Guangzhou, Guangdong 511434 (CN); WU, Shangming, Guangzhou, Guangdong 511434 (CN); XIN, Cong, Guangzhou, Guangdong 511434 (CN); ZENG, Xiangwen, Guangzhou, Guangdong 511434 (CN)
(74) Representative: Metida
(86) International application number: PCT/CN2024/090875
(87) International publication number: WO 2025/091812

(57) **Abstract**

A power distribution device and a vehicle are provided. The device comprises an MCU, an Efuse chip, and multi-channel high-side driver modules. The MCU is configured to respond to vehicle powering-on, control a plurality of drive channels of the multi-channel high-side driver module to output a drive voltage to perform normal power distribution on a plurality of electronic control units (ECUs), and control the Efuse chip to turn off output of the drive voltage. The MCU is further configured to respond to vehicle hibernation, control the Efuse chip to output the drive voltage to perform low-power distribution on the plurality of ECUs, and control the plurality of drive channels of the multi-channel high-side driver module to turn off output of the drive voltage. The power distribution device can solve the technical problems of high cost and complexity caused when an ECU constant-power distribution scheme in the industry uses Efuse chips for one-to-one power distribution at present.

## Description

### TECHNICAL FIELD

The present application relates to the technical field of automobiles, and specifically, to a power distribution device and a vehicle.

### BACKGROUND

With continuous upgrading of automotive electronic and electrical architecture, it is gradually transforming from the traditional distributed electronic and electrical architecture to a novel generation of Zone architecture. On the new Zone architecture, many automotive electronic control units need to realize Zone intelligent power distribution functions. Intelligent power distribution needs to realize functions such as current detection and I2T curve protection algorithm to replace a traditional physical fuse function. Some automotive electronic control units (ECUs) not only need to perform power distribution after vehicle starting, but also need to maintain power distribution after vehicle hibernation. This power distribution method is called constant-power distribution.

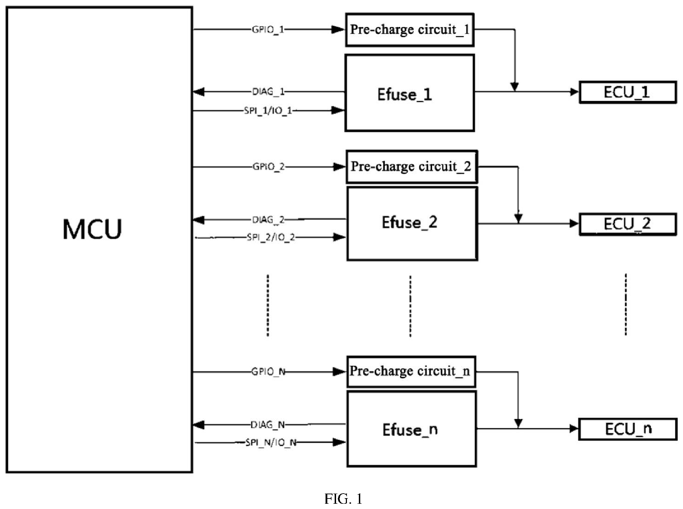

At present, an ECU constant-power distribution scheme in the industry uses Efuse chips for one-to-one power distribution, as shown in FIG. 1. At present, Efuse chips belong to a novel product in the industry, and the cost of single chips and peripheral circuits is high, with poor substitutability. In addition, the Efuse chip itself does not have a powering-on pre-charge function, which will cause overcurrent during charging at the moment of powering-on and lead to power supply shutdown. Therefore, separate pre-charge circuit design is required. In summary, the scheme of using the Efuse chips for one-to-one power distribution is not only costly but also highly complex in design.

### SUMMARY

An objective of the present application is to propose a power distribution device and a vehicle to solve the technical problems of high cost and complexity caused when an ECU constant-power distribution scheme in the industry uses Efuse chips for one-to-one power distribution at present.

To achieve the above objective, an embodiment of the present application provides a power distribution device, which includes an MCU, an Efuse chip, and multi-channel high-side driver modules;
Input pins of the Efuse chip is connected to the MCU for receiving control signals of the MCU; output pins of the Efuse chip are connected to a plurality of electronic control units (ECUs) for outputting a drive voltage to the ECUs;
the multi-channel high-side driver module includes a plurality of drive channels in one-to-one correspondence with the plurality of ECUs; an input pin of each drive channel is connected to the MCU for receiving the control signal of the MCU; an output pin of each drive channel is connected to one corresponding ECU for outputting the drive voltage to the ECU;
the MCU is configured to respond to vehicle powering-on, control the plurality of drive channels to output the drive voltage to perform normal power distribution on the plurality of ECUs, and control the Efuse chip to turn off output of the drive voltage; and
the MCU is further configured to respond to vehicle hibernation, control the Efuse chip to output the drive voltage to perform low-power distribution on the plurality of ECUs, and control the plurality of drive channels to turn off output of the drive voltage.

In accordance with an embodiment of the present application, the power distribution device of has the following beneficial effects:
If there are at least two low-current (current less than 5A) constant-power distribution ECUs in a zone controller, a combination of an Efuse chip and multi-channel high-side driver modules is used for power distribution. The multi-channel high-side driver module is configured to perform normal power distribution on the at least two low-current constant-power distribution ECUs in response to vehicle powering-on running. The Efuse chip is configured to perform low-power distribution on the at least two low-current constant-power distribution ECUs after vehicle hibernation. Compared with a scheme of using the Efuse chips for one-to-one power distribution, the combined power distribution method in this embodiment of the present application only requires one Efuse chip, reducing the use of Efuse chips. The high-side driver chip has strong resistance to inrush current, does not require a powering-on pre-charge circuit, and will not have powering-on overcurrent shutdown problems. Therefore, there is no need to add a separate powering-on pre-charge circuit. Moreover, the high-side driver chip has a low cost. In summary, the power distribution device of this embodiment of the present application is simple in structural design and can greatly reduce the cost of the power distribution device.

An embodiment of the present application further provides a vehicle, which includes the aforementioned power distribution device.

Details and advantages not described in the embodiments of the present application are explained in detail in the detailed description.

### BRIEF DESCRIPTION OF THE DRAWINGS

To more clearly illustrate the technical solutions in the embodiments of the present application, the accompanying drawings required in the description of the embodiments will be briefly introduced below. Obviously, the accompanying drawings described below are only some embodiments of the present application. For those of ordinary skill in the art, other drawings can be obtained according to these accompanying drawings without creative effort.
FIG. 1 is a structural diagram of a power distribution device mentioned in the background.
FIG. 2 is a structural diagram of a power distribution device in one embodiment of the present application.
FIG. 3 is a structural diagram of a power distribution device in one specific embodiment of the present application.
FIG. 4 is a flowchart of a normal power distribution working mode after powering-on running of the power distribution device shown in FIG. 3.
FIG. 5 is a flowchart of a hibernation switching low-power distribution working mode of the power distribution device shown in FIG. 3.
FIG. 6 is a flowchart of a power distribution switching working mode after awakening of ECUs of the power distribution device shown in FIG. 3.

### DETAILED DESCRIPTION

The detailed description of the accompanying drawings is intended to illustrate the present embodiments of the present application and is not intended to represent only the forms in which the present application can be implemented. It should be understood that the same or equivalent functions may be accomplished by different embodiments intended to be included within the spirit and scope of the present application.

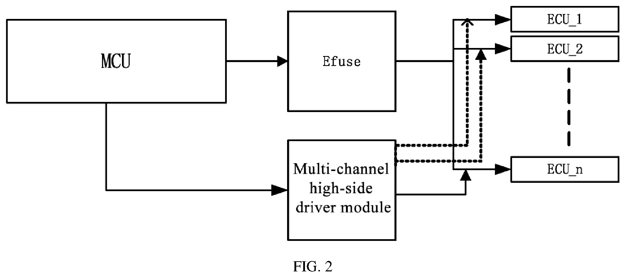

One embodiment of the present application provides a power distribution device which can achieve two power distribution methods: normal power distribution (power distribution by a high-side driver (HSD) chip) and low-power distribution (power distribution by an Efuse chip). Referring to FIG. 2, the power distribution device includes an MCU, an Efuse chip, and multi-channel high-side driver modules;
an input pin of the Efuse chip is connected to an output pin of the MCU for receiving a control signal output by the MCU, and the control signal may be a serial peripheral interface (SPI) or an I/O port control signal; output pins of the Efuse chip are connected to power input of a plurality of electronic control units (ECUs) for outputting a drive voltage to the ECUs for power distribution of the ECUs;
the multi-channel high-side driver (HSD) module includes a plurality of drive channels in one-to-one correspondence with the plurality of ECUs; an input pin of each drive channel is connected to one output pin of the MCU for receiving the control signal of the MCU, and the control signal may be a high/low-level logic voltage; an output pin of each drive channel is connected to the power input of one corresponding ECU for outputting the drive voltage to the ECU for power distribution of the ECU;
the MCU is configured to respond to vehicle powering-on, control the plurality of drive channels to output the drive voltage to perform normal power distribution on the plurality of ECUs, and control the Efuse chip to turn off output of the drive voltage; at this time, high-current power distribution is controlled and provided by the multi-channel high-side driver modules during normal ECU working, and the current is generally within 5A; and
the MCU is further configured to respond to vehicle hibernation, control the Efuse chip to output the drive voltage to perform low-power distribution on the plurality of ECUs, and control the plurality of drive channels to turn off output of the drive voltage; at this time, the current required after ECU hibernation is output and provided by the Efuse chip, and the current is generally within 10mA.

Specifically, Efuse constant-power distribution in automotive zone controllers is a novel technology at present, and application design thereof is not yet perfect. In the zone controllers, both high-current (>5A) and low-current (<5A) constant-power distribution ECU loads use Efuse chips for one-to-one power distribution design. Based on this, this embodiment proposes the aforementioned power distribution device for low-current constant-power distribution ECUs (i.e., the plurality of ECUs). If there are at least two low-current constant-power distribution ECUs in a zone controller, a combination of an Efuse chip and multi-channel high-side driver modules is used for power distribution. The multi-channel high-side driver module is configured to perform normal power distribution on the at least two low-current constant-power distribution ECUs in response to vehicle powering-on running. The Efuse chip is configured to perform low-power distribution on the at least two low-current constant-power distribution ECUs after vehicle hibernation. Compared with a scheme of using the Efuse chips for one-to-one power distribution, the combined power distribution method in this embodiment of the present application only requires one Efuse chip, reducing the use of Efuse chips. The HSD chip has strong resistance to inrush current, does not require a powering-on pre-charge circuit, and will not have powering-on overcurrent shutdown problems. Therefore, there is no need to add a separate powering-on pre-charge circuit. Moreover, the HSD chip has a low cost. In summary, the power distribution device of this embodiment is simple in structural design and can greatly reduce the cost of the power distribution device.

In some embodiments, the output pin of the Efuse chip is connected to each ECU via one power diode, an anode of the power diode is connected to the output pin of the Efuse chip, and a cathode of the diode is connected to a power input pin of the ECU.

Specifically, the power diode is a power diode with a relatively low voltage drop, mainly used for isolation of the parallel drive output of the HSD chip and the Efuse chip. The specific model is not limited, but power consumption of the diode when the output is short-circuited needs to be considered. Since the output current of the Efuse chip is limited in a low power mode, for example, an ST VNF1048 Efuse chip has only a fixed output current of 200mA in a low power mode, and an Infineon 2ED2410 Efuse chip may configure the output current value in the low power mode through external circuits. Therefore, after hibernation, if an ECU wiring harness is short-circuited to GND, causing a sharp increase in current, i.e., ECU overcurrent occurs, exceeding the current limit of the Efuse chip in the low power mode, the corresponding power diode will be reverse biased and will not conduct. Hence, the faulty ECU is isolated from the Efuse chip.

In some embodiments, the Efuse chip is provided with a diagnostic pin, the diagnostic pin is connected to an awakening pin of the MCU, and the diagnostic pin is configured to output a diagnostic signal to the MCU;
wherein: when the Efuse chip performs low-power distribution on the plurality of ECUs, if a current flowing through any of the plurality of ECUs is greater than a preset current limit of the Efuse chip in a low power mode, the diagnostic signal is at a low level for awakening the MCU; otherwise, the diagnostic signal is at a high level, the MCU hibernates, or the multi-channel high-side driver modules power the plurality of ECUs;
specifically, a detection module may be disposed, which may be integrated inside the Efuse chip for detecting whether the current flowing through the plurality of ECUs is greater than the preset current limit of the Efuse chip in the low power mode; and the Efuse chip determines whether to output a high-level diagnostic signal or a low-level diagnostic signal according to the detection result;
the MCU is further configured to control the Efuse chip and the multi-channel high-side driver modules to work according to the diagnostic signal;
wherein: the MCU is configured to respond to vehicle powering-on, output corresponding control signals to the plurality of drive channels and the Efuse chip, control the plurality of drive channels to output the drive voltage to perform normal power distribution on the plurality of ECUs, and control the Efuse chip to turn off output of the drive voltage;
wherein: when the diagnostic signal is at a high level, the MCU responds to vehicle hibernation, outputs a corresponding control signal to the plurality of drive channels and the Efuse chip, controls the Efuse chip to output the drive voltage to perform low-power distribution on the plurality of ECUs, and controls the plurality of drive channels to turn off output of the drive voltage; and
wherein: when the diagnostic signal is at a low level, the MCU is awakened by the Efuse chip for outputting a corresponding control signal to the plurality of drive channels and the Efuse chip, control the plurality of drive channels to output the drive voltage to perform normal power distribution on the plurality of ECUs, and control the Efuse chip to turn off output of the drive voltage; at this time, the power distribution method is switched from low-power distribution of the Efuse chip to normal power distribution of the HSD chip.

In some embodiments, the power distribution device further includes an inverting circuit and a switching diode, an input pin of the inverting circuit is connected to the diagnostic pin, an output pin of the inverting circuit is connected to an anode of the switching diode, and a cathode of the switching diode is connected to the input pins of the plurality of drive channels; the inverting circuit is configured to receive the diagnostic signal and invert the diagnostic signal; if the diagnostic signal is at a high level, a low level is obtained after inversion, and at this time the switching diode does not conduct; if the diagnostic signal is at a low level, a high level is obtained after inversion, and at this time, the switching diode conducts, and the high level is input into the input pins of the plurality of drive channels,
wherein, when the input pin of the drive channel inputs a high level, the output pin of the drive channel outputs the drive voltage to perform normal power distribution on the ECU; and when the input pin of the drive channel inputs a low level, the output pin of the drive channel turns off output of the drive voltage.

Specifically, after the Efuse chip awakens the MCU, an entire mode switching process to switching of the HSD chip output to ECU normal power distribution takes approximately 30ms which will cause the power distribution of the subsequent-stage ECUs to be interrupted, making it impossible to maintain continuous power distribution during the switching process. Therefore, this embodiment designs the inverting circuit. After the diagnostic signal passes through the inverting circuit, the signal forms an OR gate with the control signal output by the MCU to the plurality of drive channels. The change in the level of the diagnostic signal can instantly control the HSD chip output to turn on while awakening the MCU, ensuring the continuity of power distribution for the ECU after power distribution mode switching.

In some embodiments, the multi-channel high-side driver module further includes a current detection pin, the current detection pin is connected to an ADC function detection pin of the MCU for outputting a power distribution current signal of each ECU to the MCU; specifically, current sensors may be disposed to detect the power distribution current signal of each ECU and feed detection results back to the multi-channel high-side driver module.

The MCU is further configured to diagnose whether each ECU has a fault according to the power distribution current signal of each ECU, and, if any of the plurality of ECUs has a fault, control the drive channel corresponding to the ECU to turn off output of the drive voltage, thereby isolating the faulty ECU from the HSD chip and realizing an I2T protection function; specifically, the signal output by the current detection pin is specifically a corresponding voltage value obtained by ADC conversion of the power distribution current of each ECU, such that the MCU can perform calculation; the MCU compares the voltage value with a preset voltage threshold inside; if the voltage value is greater than or equal to the voltage threshold, the corresponding ECU is determined to have a fault; and if the voltage value is less than the voltage threshold, the corresponding ECU is determined to be normal.

In some embodiments, the multi-channel high-side driver module is provided with a diagnostic function selection input pin, the diagnostic function selection input pin is connected to a diagnostic function selection output pin of the MCU; and the diagnostic function selection input pin is configured to receive a diagnostic function selection signal output by the diagnostic function selection output pin of the MCU.

The multi-channel high-side driver module is specifically configured to determine a target ECU according to the diagnostic function selection signal and output the power distribution current signal of the target ECU to the MCU.

In some embodiments, the input pin of each drive channel is connected to one output pin of the MCU via one switching diode, an anode of the switching diode is connected to the MCU, and a cathode of the switching diode is connected to the input pin of each drive channel.

Specifically, when the output pin of the MCU outputs a high level, the corresponding switching diode conducts, the input pin of the drive channel receives a high level, and the output pin of the drive channel outputs the drive voltage to perform normal power distribution on the ECU; and when the output pin of the MCU outputs a low level, the corresponding switching diode does not conduct, the input pin of the drive channel receives a low level, and the output pin of the drive channel turns off output of the drive voltage.

In some embodiments, the multi-channel high-side driver module is formed by: a plurality of single-channel HSD chips connected in parallel, or a plurality of multi-channel HSD chips connected in parallel, or a multi-channel HSD chip, or at least one single-channel HSD chip and at least one multi-channel HSD chip connected in parallel, or a high-side driver chip controlled by a serial peripheral interface (SPI).

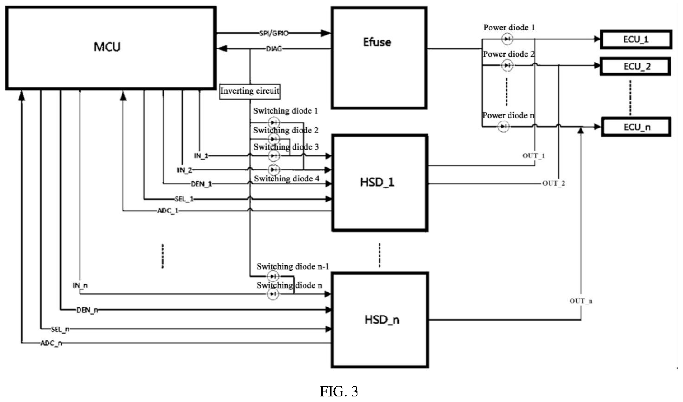

For example, FIG. 3 shows a power distribution device in one specific embodiment. In the power distribution device of FIG. 3, the multi-channel high-side driver module is formed by at least one single-channel HSD chip and at least one multi-channel HSD chip connected in parallel. The multi-channel high-side driver module includes n HSD chips, named HSD_1 to HSD_n, respectively.

HSD_1 is a multi-channel HSD chip, HSD_1 includes two drive channels 1 and 2, drive channel 1 inputs IN_1 signal and outputs OUT_1 signal, drive channel 2 inputs IN_2 signal and outputs OUT_2 signal, HSD_1 is equipped with an enabling pin, a diagnostic function selection input pin, and a current detection pin, the enabling pin is configured to receive enabling signal DEN_1 output by the MCU. For example, when DEN_1 is at a high level, drive channel 1 is enabled, and when DEN_1 is at a low level, drive channel 1 is disabled; when IN_1 signal is at a high level and drive channel 1 is enabled, drive channel 1 outputs OUT_1 signal to perform power distribution on the corresponding ECU; and when IN_1 signal is at a low level and drive channel 1 is disabled, drive channel 1 turns off output of OUT_1 signal. For example, when DEN_2 is at a high level, drive channel 2 is enabled, and when DEN_2 is at a low level, drive channel 2 is disabled; when IN_2 signal is at a high level and drive channel 2 is enabled, drive channel 2 outputs OUT_2 signal to perform power distribution on the corresponding ECU; and when IN_2 signal is at a low level and drive channel 2 is disabled, drive channel 2 turns off output of OUT_2 signal. The diagnostic function selection input pin is configured to receive diagnostic function selection signal SEL_1 output by the MCU. The current detection pin is configured to output ECU power distribution current signal ADC_1 to the MCU. When SEL_1 is at a low level, ADC_1 output is the current ADC value corresponding to channel OUT1; and when SEL_1 is at a high level, ADC_1 output is the current ADC value corresponding to channel OUT2.

HSD_n is a single-channel HSD chip, HSD_1 includes one drive channel n, drive channel n inputs IN_n signal and outputs OUT_n signal, HSD_n is equipped with an enabling pin, a diagnostic function selection input pin, and a current detection pin, the enabling pin is configured to receive enabling signal DEN_n output by the MCU. For example, when DEN_n is at a high level, drive channel n is enabled, and when DEN_n is at a low level, drive channel n is disabled; when IN_n signal is at a high level and drive channel n is enabled, drive channel n outputs OUT_n signal to perform power distribution on the corresponding ECU; and when the IN_n signal is at a low level and drive channel n is disabled, drive channel n turns off output of the OUT_n signal. The diagnostic function selection input pin is configured to receive diagnostic function selection signal SEL_n output by the MCU. The current detection pin is configured to output ECU power distribution current signal ADC_n to the MCU. When SEL_n is at a high level, ADC_n output is the current ADC value corresponding to channel OUT_n; and when SEL_1 is at a low level, ADC_n output is turned off.

Specifically, the current ADC value refers to a result of converting a current signal into a digital signal through an analog-to-digital converter (ADC). The ADC value is usually expressed as a digital current value and can be configured to measure and analyze current. A magnitude and accuracy of the ADC value depend on the number of bits in the ADC and the reference voltage; the higher the number of bits, the higher the accuracy of the ADC and the wider the current range it can represent; the reference voltage determines a unit and a range of the ADC value. For example, it is supposed an ADC has 10 bits and a reference voltage of 5V, then the current resolution of this ADC is 5V/2^10 = 5mV, that is, each ADC unit represents 5 millivolts of current; if a current signal is 20mA, then the corresponding ADC value is 20mA/5mV = 4. Therefore, the current ADC value can be achieved by converting the current signal to a suitable voltage range and using an appropriate ADC.

The power distribution device in FIG. 3 mainly includes the following working modes: normal power distribution after powering-on running, hibernation switching low-power distribution, and power distribution switching after awakening of ECUs.

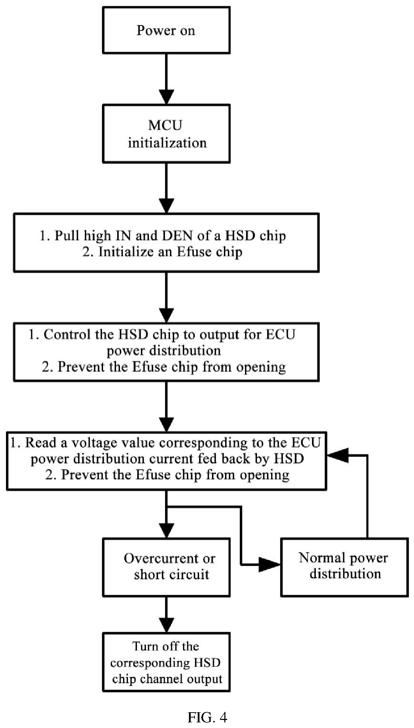

Please refer to FIG. 4. The working mode of normal power distribution after powering-on running includes: after MCU powering-on initialization, IN_1 to IN_n pins are pulled high, which controls the HSD chip channel OUT output to perform normal power supply on the subsequent-stage ECUs. At this time, the Efuse chip is controlled by the MCU not to output. The MCU controls DEN_1 to DEN_n and SEL_1 to SEL_n simultaneously. By changing the level of SEL_1 to SEL_n, ADC_1 to ADC_n polls to output the voltage ADC value corresponding to the current of ECU power distribution. This is used to monitor the current value of the subsequent-stage ECU_n under normal power supply in real time. If the ECU_n has overcurrent or short circuit to GND, the ADC output current value can be used to perform I2T protection shutdown output.

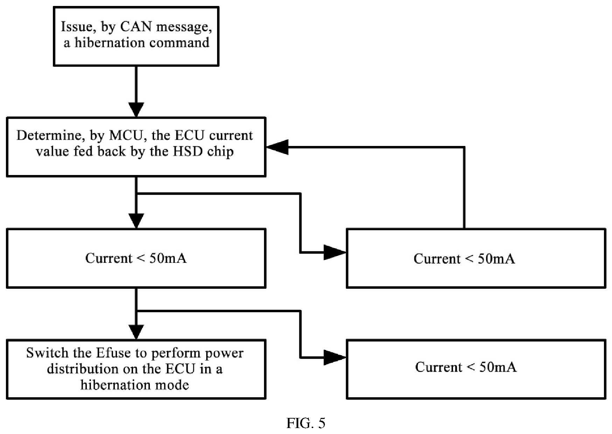

Please refer to FIG. 5. The working mode of hibernation switching low-power distribution includes: just before the vehicle enters a hibernation state, the MCU switches the power distribution according to the following two conditions. ① The MCU receives a hibernation command from an automotive CAN bus network message. ② The MCU reads the current value output by the HSD chip channel, that is, the power distribution current of ECU_1 to ECU_n, and the power distribution current is less than 50mA; when both of the above conditions are met, after the MCU controls the Efuse chip to enter the low power mode and output power distribution for a period, the MCU controls the HSD chip to turn off the output, that is, the HSD chip enters a hibernation mode and no longer performs power distribution on ECU_1 to ECU_n; at this time, in the hibernation mode, the Efuse chip performs power distribution on ECU_1 to ECU_n completely, thereby realizing the automatic switching of the power distribution mode.

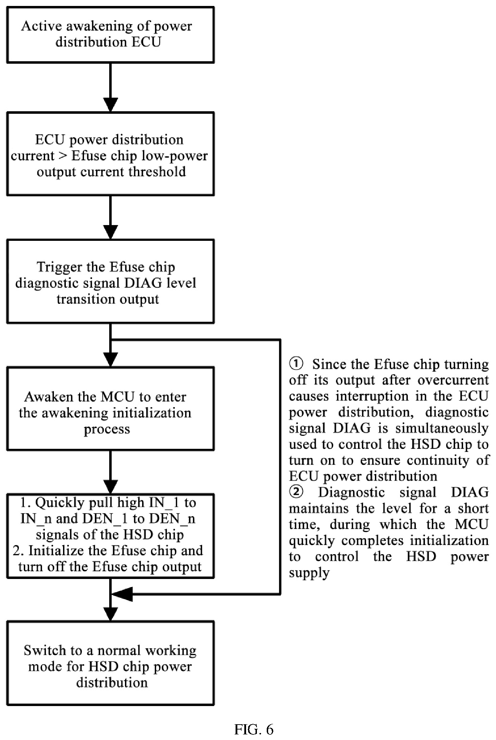

Please refer to FIG. 6. The working mode of the power distribution switching after awakening of ECUs includes: Because the output current of the Efuse chip is limited in a low power mode, such as the ST VNF1048 which has a fixed output current of only 200mA in the low power mode, and the Infineon 2ED2410 which can configure the output current by external circuits in the low power mode, after hibernation, if subsequent-stage ECU_1 to ECU_n are awakened by subsequent-stage nodes, causing the current to rise back to the normal working state, or if the ECU_1 to ECU_n wiring harness is short-circuited to GND, causing the current to increase sharply and exceed the current limit of the Efuse chip in the low power mode, the Efuse chip turns off the output in the low power mode, triggering diagnostic signal DIAG to change the level, and awakening the MCU to switch the power distribution mode to the HSD chip for power supply. The parallel OR gate composed of the HSD chip IN_n and the diagnostic signal DIAG output functions in this manner: after the Efuse chip awakens the MCU, an entire mode switching process to power distribution by the HSD chip output to the ECU takes about 30ms, which will cause the power distribution of subsequent-stage ECUs_1 to ECU_n to be interrupted, and the power distribution cannot be maintained continuously during the switching process. Therefore, diagnostic signal DIAG passes through the inverting circuit and then forms the OR gate with IN_1 to IN_n. The level change of diagnostic signal DIAG awakens the MCU and at the same time can instantly control the HSD chip to turn on, ensuring the power distribution continuity of ECUs_1 to ECU_n after mode switching.

Another embodiment of the present application provides a vehicle, which includes the power distribution device described in the above embodiments.

The various embodiments of the present application have been described above. The above description is exemplary and not exhaustive, and is not limited to the disclosed embodiments. A lot of modifications and variations will be apparent to those of ordinary skill in the art without departing from the scope and gist of the various embodiments described. The terminology used herein is chosen to best explain the principles, practical applications, or technological improvements to the various embodiments, or to enable those of ordinary skill in the art to understand the embodiments disclosed herein.

## Claims

1. A power distribution device, **characterized by** comprising an MCU, an Efuse chip, and multi-channel high-side driver modules, wherein:
an input pin of the Efuse chip is connected to the MCU for receiving a control signal of the MCU; output pins of the Efuse chip are connected to a plurality of electronic control units (ECUs) for outputting a drive voltage to the ECUs;
the multi-channel high-side driver module comprises a plurality of drive channels in one-to-one correspondence with the plurality of ECUs; an input pin of each drive channel is connected to the MCU for receiving the control signal of the MCU; an output pin of each drive channel is connected to one corresponding ECU for outputting the drive voltage to the ECU;
the MCU is configured to respond to vehicle powering-on, control the plurality of drive channels to output the drive voltage to perform power distribution on the plurality of ECUs, and control the Efuse chip to turn off output of the drive voltage; and
the MCU is further configured to respond to vehicle hibernation, control the Efuse chip to output the drive voltage to perform power distribution on the plurality of ECUs, and control the plurality of drive channels to turn off output of the drive voltage.

2. The power distribution device according to claim 1, wherein the output pin of the Efuse chip is connected to each ECU via one power diode, an anode of the power diode is connected to the output pin of the Efuse chip, and a cathode of the diode is connected to a power input pin of the ECU.

3. The power distribution device according to claim 2, wherein the Efuse chip is provided with a diagnostic pin, and the diagnostic pin is configured to output a diagnostic signal to the MCU;
wherein: when the Efuse chip performs low-power distribution on the plurality of ECUs, if a current flowing through any of the plurality of ECUs is greater than a preset current limit, the diagnostic signal is at a low level; otherwise, the diagnostic signal is at a high level;
the MCU is further configured to control the Efuse chip and the multi-channel high-side driver modules to work according to the diagnostic signal;
wherein: the MCU responds to vehicle powering-on, controls the plurality of drive channels to output the drive voltage to perform normal power distribution on the plurality of ECUs, and controls the Efuse chip to turn off output of the drive voltage;
when the diagnostic signal is at a high level, the MCU responds to vehicle hibernation, controls the Efuse chip to output the drive voltage to perform power distribution on the plurality of ECUs, and controls the plurality of drive channels to turn off output of the drive voltage; and
when the diagnostic signal is at a low level, the MCU controls the plurality of drive channels to output the drive voltage to perform power distribution on the plurality of ECUs, and controls the Efuse chip to turn off output of the drive voltage.

4. The power distribution device according to claim 3, wherein the power distribution device further comprises an inverting circuit and a switching diode, an input pin of the inverting circuit is connected to the diagnostic pin, an output pin of the inverting circuit is connected to an anode of the switching diode, and a cathode of the switching diode is connected to the input pins of the plurality of drive channels; and
wherein when the input pin of the drive channel inputs a high level, the output pin of the drive channel outputs the drive voltage to perform normal power distribution on the ECU; when the input pin of the drive channel inputs a low level, the output pin of the drive channel turns off output of the drive voltage.

5. The power distribution device according to claim 1, wherein the multi-channel high-side driver module further comprises a current detection pin, the current detection pin is connected to the MCU for outputting a power distribution current signal of each ECU to the MCU; and
the MCU is further configured to diagnose whether each ECU has a fault according to the power distribution current signal of each ECU, and, if any of the plurality of ECUs has a fault, control the drive channel corresponding to the ECU to turn off output of the drive voltage.

6. The power distribution device according to claim 5, wherein the multi-channel high-side driver module is provided with a diagnostic function selection input pin, and the diagnostic function selection input pin is configured to receive a diagnostic function selection signal of the MCU; and
the multi-channel high-side driver module is specifically configured to determine a target ECU according to the diagnostic function selection signal and output the power distribution current signal of the target ECU to the MCU.

7. The power distribution device according to claim 1, wherein the input pin of each drive channel is connected to the MCU via one switching diode, an anode of the switching diode is connected to the MCU, and a cathode of the switching diode is connected to the input pin of each drive channel.

8. The power distribution device according to claim 1, wherein the multi-channel high-side driver module is formed by: a plurality of single-channel high-side driver (HSD) chips connected in parallel, or a plurality of multi-channel HSD chips connected in parallel, or a multi-channel HSD chip, or at least one single-channel HSD chip and at least one multi-channel HSD chip connected in parallel, or a high-side driver chip controlled by a serial peripheral interface (SPI).

9. A vehicle, **characterized in that** the vehicle comprises the power distribution device according to any one of claims 1 to 8.
